# EUROPEAN PATENT APPLICATION

(11) **EP 4 461 950 A1**
(43) Date of publication of application: **13.11.2024**
(21) Application number: 23173219.9
(22) Date of filing: 12.05.2023
(51) Int. Cl.: F03B 13/20, H02K 7/18, H02K 35/02, F03G 7/08

(54) **WAVE ENERGY CONVERTER**

(71) Applicant: BragaMetro, Lda., 4750-053 Alheira, Barcelos Braga (PT)
(72) Inventor: Silva, Virgilio, 4750-053 Alheira, Barcelos (PT)

(57) **Abstract**

The proposed invention is a direct drive converter of sea waves energy in electrical energy. It comprises a closed floating hull (1) and a weighted platform (2) within, equipped with coils and inductors respectively. The hull moves relatively to the platform upon facing the sea waves and electric current is induced in the coils. Hence, the sea waves energy is directly converted in electrical energy, avoiding energy losses on intermediate systems for the conversion. Also, the proposed invention incurs in more types of motion than other direct drive sea waves converters and is completely closed.

## Description

The present invention relates to a wave energy converter, more precisely, a direct drive converter of sea waves energy in electrical energy.

Presently, and following the classification method used by Falcao, Antonio. (2010). Wave energy utilization: A review of the technologies. Renewable and Sustainable Energy Reviews. 14. 899-918. 10.1016/j.rser.2009.11.003*.,* three major classes of wave energy converters can be identified: oscillating water column, oscillating body and overtopping converters. Oscillating water column converters are fixed structures or floating devices, which rely on the displacement of air caused by the oscillation of a sea water column to activate a turbine and, in turn, an electric generator. Oscillating body converters are devices with at least one component oscillating with the sea waves and which movement allows to induce electrical energy. Overtopping converters are fixed structures or floating devices that gather the water of sea waves in a reservoir, at a level above the sea level, and that drain it through a turbine which activates an electric generator.

The main companies developing wave energy converters, namely *CorPower Ocean^{™}, AW-Energy, HACE* and *Ocean Energy,* to name a few, put forward oscillating body and oscillating water column type converters whose energy conversion is indirect. These rely on intermediate systems that translate the waves energy in mechanical energy which, in turn, activates an electric generator. Such indirect drive adds complexity to the converters and reduces their efficiency. Referring to Antonio's Falcao review and to Têtu, A. (2017). Power Take-Off Systems for WECs. In: Picher, A., forced, J. (eds) Handbook of Ocean Wave Energy. Ocean Engineering & Oceanography, vol 7. Springer, Cham. https://doi.org/10.1007/978-3-319-39889-1_8*,* direct drive converters have been proposed. These are oscillating body type converters and are composed by a translator and by a stator equipped with inductors and windings. The translator moves relatively to the stator and thus generates electric current by electromagnetic induction.

The objective of the present invention is to provide a new design for a direct drive wave energy converter that is simple and efficient.

The proposed converter is an oscillating body device comprised by a closed floating hull, a platform within, laid in roller tracks, a weight sustained in the platform, a set of coils in the inner bottom of the hull, and a set of inductors in the platform, facing the coils.

Compared with other direct drive converters, the present invention incurs in more types of motions. Given its shape, it can yaw, sway and surge, similarly to a boat, thus better capturing the sea waves energy. Furthermore, all the conversion system is enclosed in the hull and is thus protected from the external elements.

In the drawings:
Fig. 1 is a perspective view of the converter, for which the inductors are magnets. The coils are not drawn for clarity.
Fig. 2 is a perspective view of the converter, for which the inductors are electromagnets. The coils and the windings making up the electromagnets are not drawn for clarity.

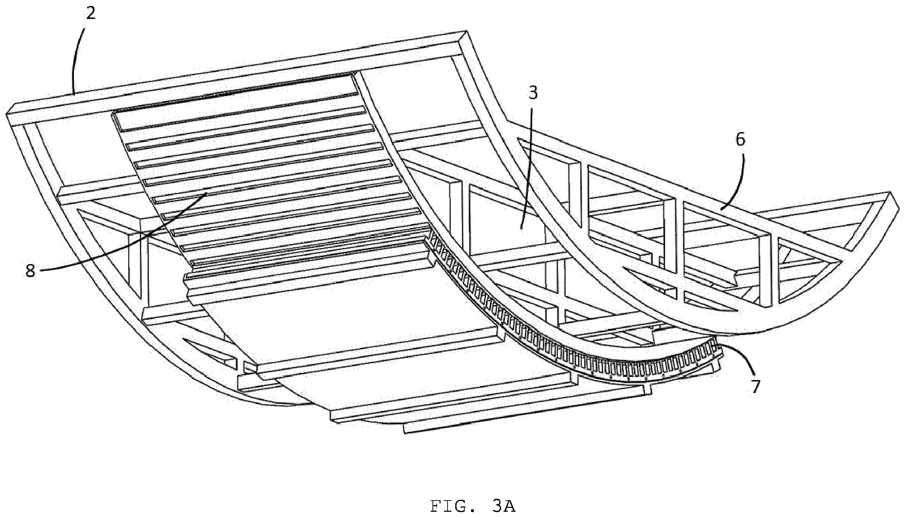

Fig. 3A is an isolated perspective view of the platform equipped with the magnets, and the armature of the coils. The coils are not drawn for clarity.

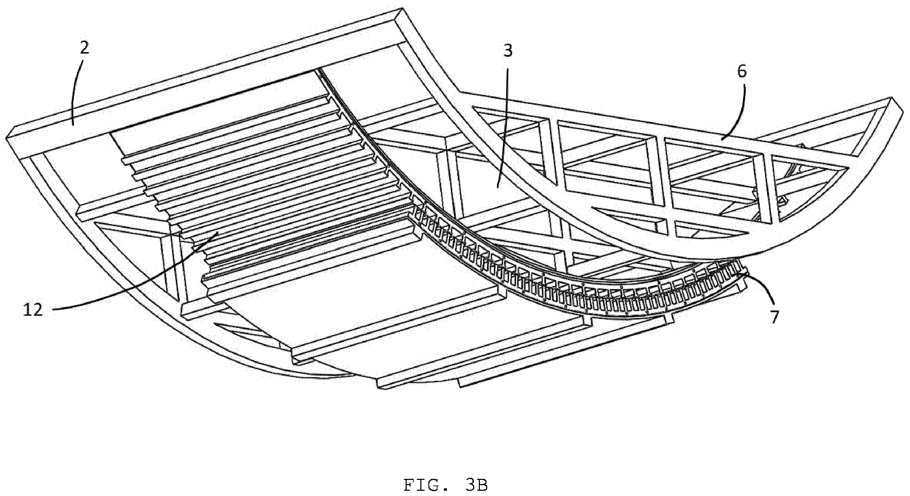

Fig. 3B is an isolated perspective view of the platform equipped with the electromagnets, and the armature of the coils. The coils and the windings making up the electromagnets are not drawn for clarity.
Fig. 4A is a plan view locally enlarged of the generator whose inductors are magnets.
Fig. 4B is a plan view locally enlarged of the generator whose inductors are electromagnets.
Fig. 5A is a schematic plan view of the converter in the sea in equilibrium.
Fig. 5B is a schematic plan view of the converter in the sea out of equilibrium.

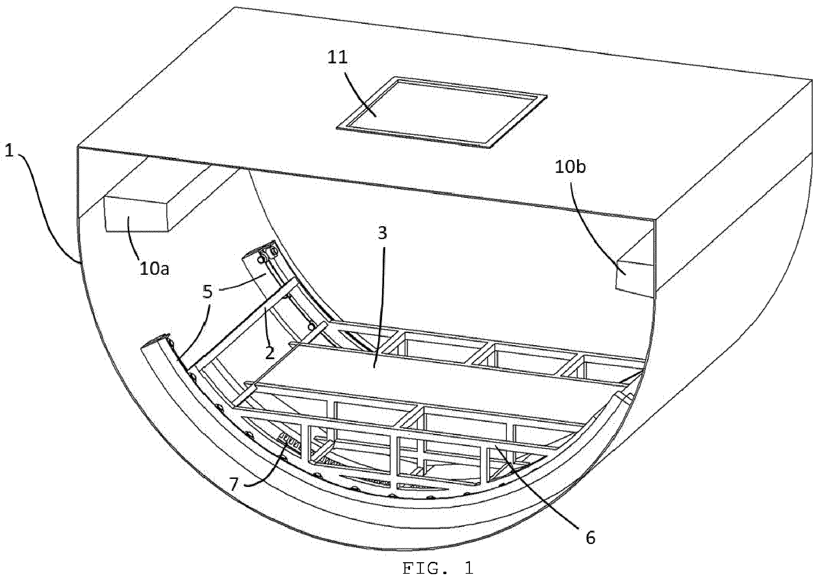

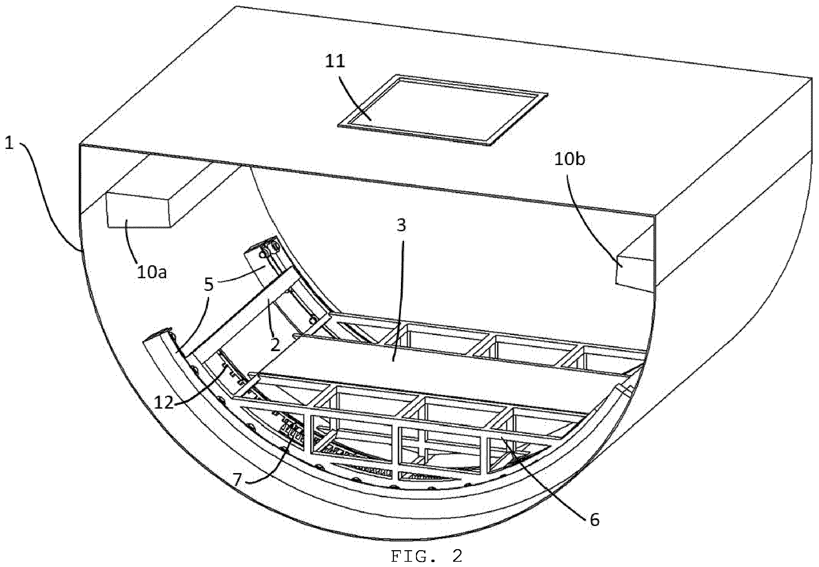

Referring to Fig. 1 and 2, the present invention is a wave energy converter of the oscillating body type, comprising a closed floating hull (1), which contains within a platform (2) capable of sustaining a weight (3) and under which the hull moves, by the action of sea waves. The platform is equipped with a set of inductors which induce electric current in coils (4) fixed to the inner bottom of the hull.

Inside the hull (1), the platform (2) is placed on roller tracks (5) and is reinforced with a frame (6) to sustain the weight (3). This weight, of mass duly dimensioned, accentuates the oscillation difference between the hull and the platform, favouring the production of electrical energy by electromagnetic induction. The electrical energy produced is directly proportional to the mass of the weight and the oscillation difference between the hull and the platform.

On the inner bottom of the hull, under the platform, is the armature (7) of the coils (4). The inductors are fixed to the platform facing the armature (7). The hull-armature-coils (1,7,4) and the inductors constitute jointly the electric generator of the converter. The inductors can be magnets (8) or electromagnets (9). The magnets render simplicity to the converter. The electromagnets render control over the generator, by varying the electric current that feeds them. It is expected that this control will allow to optimize the production of electrical energy with the converter. The armatures of the coils and the electromagnets (7,12) are made of electrical steel to promote the magnetic flux through the coils and windings.

The movement of the hull (1) relatively to the platform (2) is limited by a restraining system. This system allows to maintain the integrity of the converter when facing excessive wave amplitudes and to control the power of the electric energy produced. In the drawings that accompany the present document, this system is represented by two stops (10a, 10b), for representation purposes only.

At the top of the hull there is an opening (11) to access the interior of the converter.

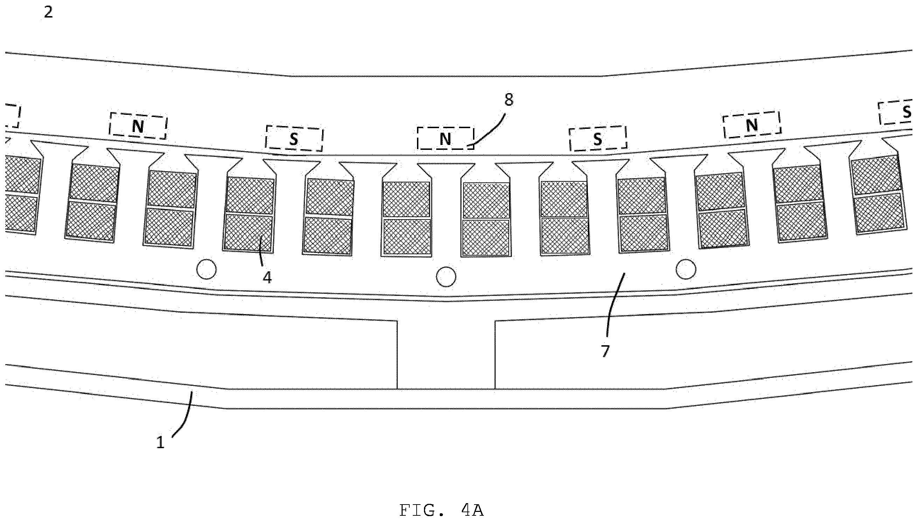

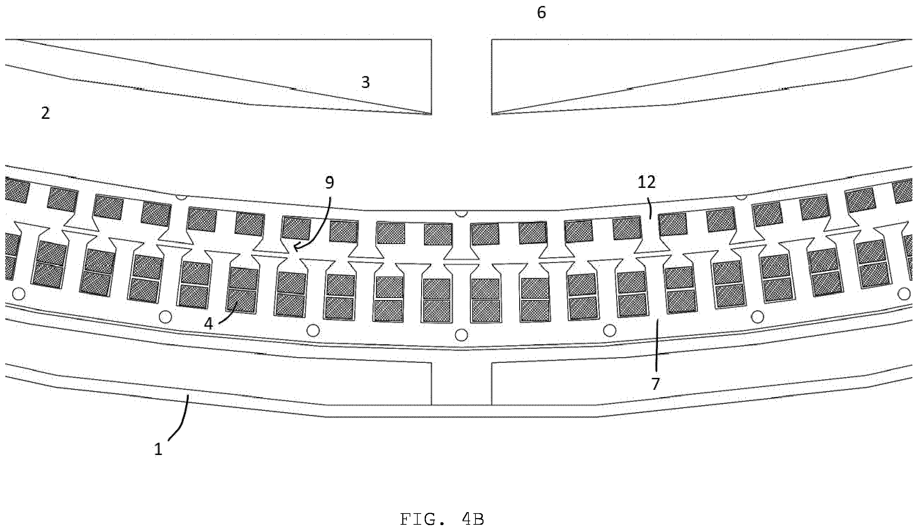

Referring to Fig. 4A, the magnets are arranged in an antiparallel manner, hence opposing poles are represented next to each other.

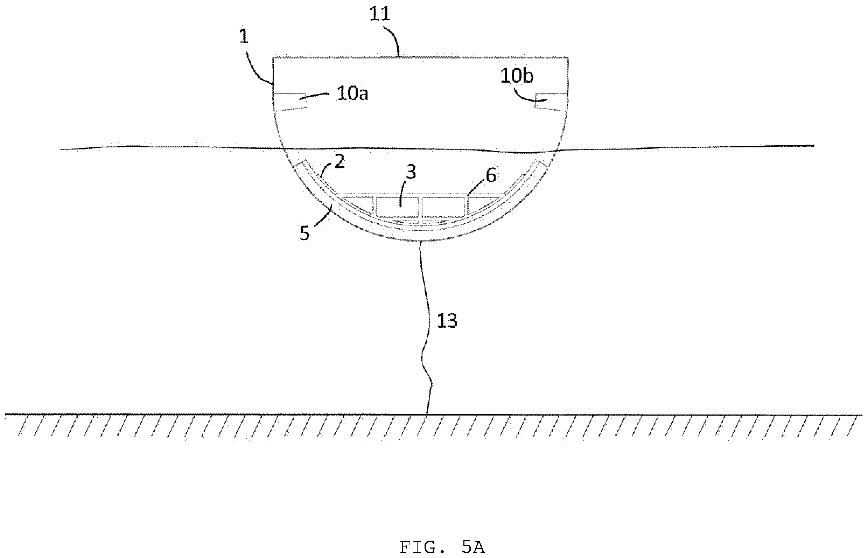

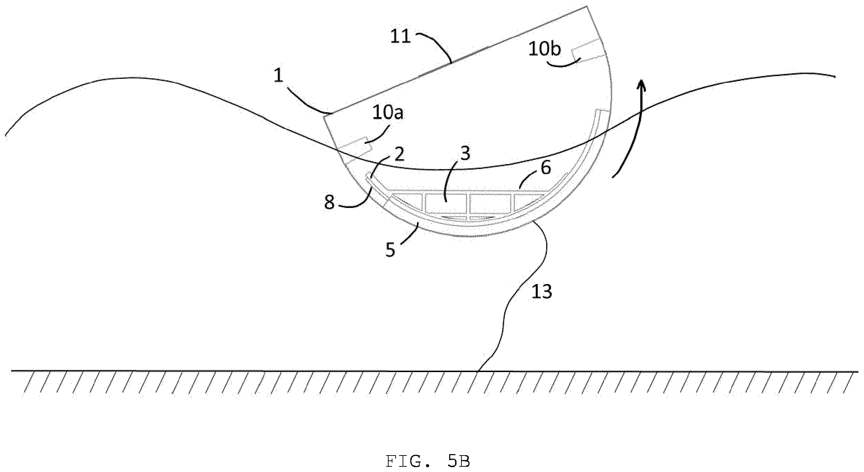

Fig. 5A and 5B schematize the operation of the converter. By counterposing both it is to be noted that the joint platform-weight (2,3) maintains levelled, being the joint hull-armature-coils (1,7,4) that move with the wave. The relative motion like so established, varies the magnetic flux crossing the coils, inducing electric current in them. The electric current is then converted in a DC current, using a rectifier circuit, and reconverted in an AC current of frequency and amplitude matching the grid current, using an inverter.

The drawings that accompany the present document introduce the converter with a semicylindrical shape. However, it is expected a refinement of the shape, aiming at optimizing the oscillation with the sea waves and of maintaining the upright orientation of the device. This refinement can include the complement of the hull with floaters.

Fig. 5A and 5B also schematize an anchoring system (13) of the converter. This system aims at hindering the drift of the device and preserving its orientation relative to the wave fronts, without inhibiting its oscillation.

## Claims

1. Direct drive converter of sea waves energy in electrical energy comprising:
a. a closed floating hull (1);
b. a platform (2), within the hull (1) and laid in roller tracks (5);
c. a weight (3), sustained in the platform (2);
d. a set of coils (4), in the inner bottom of the hull (1);
e. a set of inductors, in the platform (2) and facing the coils (4).

2. Converter in accordance with claim 1 wherein the inductors can be magnets (8) or electromagnets (9).

3. Converter in accordance with claims 1 and 2 **characterized by** a restraining system of the movement of the hull (1).

4. Converter in accordance with claims 1 to 3 **characterized by** the hull (1) having a semicylindrical shape or a shape derived thereof.

5. Converter in accordance with claims 1 to 4 further comprising floaters.

6. Converter in accordance with claims 1 to 5 further comprising an anchoring system (13).
